Europäisches Patentamt

European Patent Office

Office européen des brevets

(11) Numéro de publication: **0 307 298**
A1

# DEMANDE DE BREVET EUROPEEN

(21) Numéro de dépôt: 88402226.0

(22) Date de dépôt: 05.09.88

(51) Int. Cl.⁴: **B 01 J 8/02**
F 25 B 35/04

(30) Priorité: 07.09.87 FR 8712391

(43) Date de publication de la demande:
15.03.89 Bulletin 89/11

(84) Etats contractants désignés:
AT BE CH DE GB IT LI LU NL SE

(71) Demandeur: SOCIETE NATIONALE ELF AQUITAINE
Société anonyme dite
Tour Elf 2, Place de la Coupole La Défense 6
F-92400 Courbevoie (FR)

(72) Inventeur: Lebrun, Michel
2 Rue des Sureaux
F-66000 Perpignan (FR)

Mauran, Sylvain
14 Rue Nationale
F-66600 Espira de L'Agly (FR)

Mazet, Nathalie
23 Avenue Joffre
F-66200 Corneilla del Vercol (FR)

(74) Mandataire: Boillot, Marc
SOCIETE NATIONALE ELF AQUITAINE Division
Propriété Industrielle Tour Elf
F-92078 Paris la Défense Cédex 45 (FR)

(54) Réacteur solide-gaz en lit fixe et utilisation de ce réacteur dans les pompes à chaleur thermochimique.

(57) La présente invention concerne un réacteur solide-gaz en lit fixe, caractérisé en ce qu'il comporte un ensemble modulaire constitué par une enveloppe cylindrique (1), une colonne de distribution de fluide caloporteur (6A) et une colonne de récupération de fluide (6E), au moins deux crémaillères (10) d'accrochage d'éléments échangeurs modulaires (2, 22, 21) et en alternance d'éléments sandwich (2, 7, 71, 72) conteneurs de sel chimique réagissant avec un gaz circulant entre les différents éléments modulaires.

FIG.1

EP 0 307 298 A1

## Description

## REACTEUR SOLIDE-GAZ EN LIT FIXE ET UTILISATION DE CE REACTEUR DANS LES POMPES A CHALEUR THERMOCHIMIQUE

La présente invention concerne un réacteur solide-gaz en lit fixe et son utilisation dans les pompes à chaleur thermochimique.

Il est connu, notamment par les demandes de brevet FR 83 10955 et FR 85 08408, des réacteurs solides-gaz utilisés pour constituer une pompe à chaleur thermochimique. Toutefois, ces réacteurs, réalisés pour les besoins des expériences, n'avaient pas une structure facilement industriable.

Un premier but de l'invention est de proposer un réacteur solide-gaz en lit fixe à structure modulaire, afin de disposer d'une installation dont la capacité puisse être variable de façon à permettre d'effectuer aisément des études de couplage de plusieurs réacteurs et à pouvoir déboucher également sur une production industrielle de machines de différentes capacités. Cette structure modulaire et la géométrie adoptée permettent de réduire la masse métallique et le volume d'échangeur afin de minimiser l'inertie du système, et de faciliter le chargement du réacteur.

Ce premier but est atteint par le fait que le réacteur solide-gaz en lit fixe est caractérisé en ce qu'il comporte un ensemble modulaire constitué par une enveloppe cylindrique, une colonne de distribution de fluide et une colonne de récupération de fluide caloporteur, au moins deux crémaillères d'accrochage d'éléments échangeurs modulaires et en alternance d'éléments conteneurs de sel chimique réagissant avec un gaz circulant entre les différents éléments modulaires.

Selon une caractéristique supplémentaire, les éléments échangeurs sont constitués de deux plaques circulaires embouties et soudées entre elles de façon à former un labyrinthe de circulation du fluide caloporteur entre la colonne de distribution et la colonne de récupération du fluide, l'ensemble des deux plaques étant entouré d'une jupe circulaire disposée vers la partie supérieure pour former un réceptacle destiné à être rempli de sel.

Selon une autre caractéristique, les plaques sont embouties de façon à former, lorsqu'elles sont soudées entre elles, deux peignes dont les dents de l'un s'imbriquent dans les dents de l'autre.

Un autre but de l'invention est de proposer une structure modulaire sandwich permettant une bonne répartition et une bonne diffusion du gaz.

Ce but est atteint par le fait que l'élément conteneur de sel est constitué d'une jupe cylindrique fermée à sa partie inférieure par une grille sur laquelle repose un élément en métal déployé recouvert d'une deuxième grille, le restant du volume défini par la deuxième grille et la jupe étant rempli de sel.

Selon une autre caractéristique de l'invention, la colonne de distribution de fluide et la colonne de récupération de fluide sont reliées chacune aux échangeurs par des tuyaux flexibles.

Selon une autre caractéristique, des languettes de fixation solidaires de la plaque échangeur ou de la plaque en métal déployé sont introduites dans les dents des crémaillères d'accrochage.

Selon une autre caractéristique, plusieurs ensembles modulaires sont montés en série pour former un réacteur de capacité supérieure et le réacteur est fermé à chaque extrémité par un chapeau comportant une évacuation ou une arrivée de gaz.

Selon une autre caractéristique de l'invention, le sel utilisé est un mélange de chlorure de calcium et d'un liant tel que le graphite expansé et le gaz est de la méthylamine.

Selon une autre caractéristique, le réacteur fonctionne avec un gaz sous une pression comprise entre 0,1 et 25 bars et un fluide caloporteur sous une pression de l'ordre de 4 bars.

Une dernière caractéristique de l'invention est l'utilisation de deux réacteurs associés de façon à constituer une pompe à chaleur thermochimique.

D'autres caractéristiques et avantages de la présente invention apparaîtront plus clairement à la lecture de la description ci-après faite en référence aux dessins annexés dans lesquels :

- la figure 1 représente une vue en coupe d'un réacteur à élément modulaire selon l'invention,

- la figure 2 représente une vue de détail de l'assemblage sandwich des éléments et du montage de ces éléments sur une crémaillère,

- la figure 3 représente une vue de dessus de l'ensemble modulaire du réacteur comportant à sa partie supérieure une plaque d'échangeur pour fluide caloporteur,

- la figure 4 représente une vue de détail en coupe de l'élément échangeur,

- la figure 5 représente une vue en coupe de la plaque échangeur,

- la figure 6 représente une vue latérale de la colonne de distribution de fluide ou de récupération de fluide et d'une crémaillère,

- la figure 7 représente une vue en perspective d'un élément en métal déployé utilisé dans la structure sandwich.

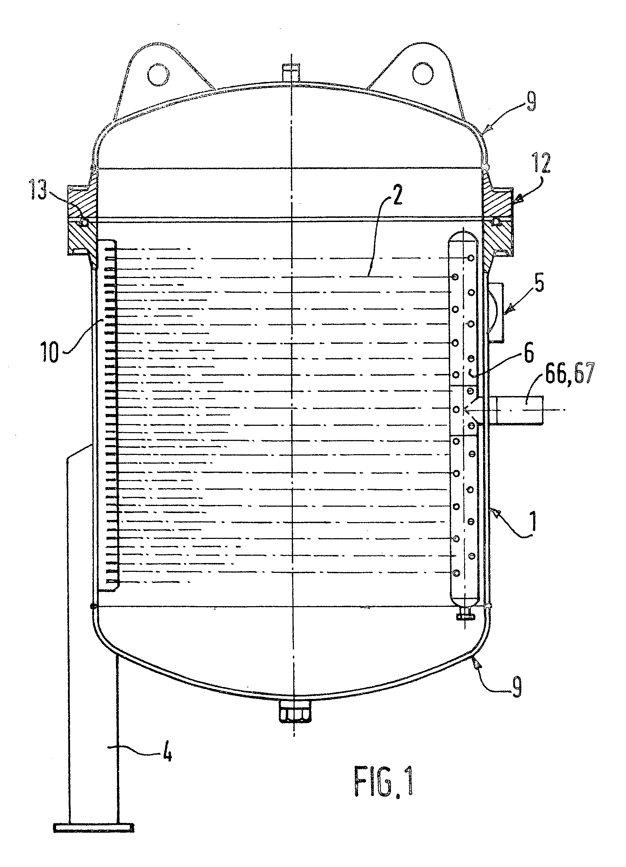

La figure 1 représente un ensemble modulaire constitué par une enveloppe cylindrique (1) en matériau adéquat dans laquelle on place des éléments crémaillères (10) et une colonne de distribution de fluide (6) ou d'évacuation de fluide et une structure modulaire sandwich constituée par des éléments (2) de diamètre inférieur au diamètre du cylindre (1) pour laisser une place suffisante aux crémaillèes (10) et aux colonnes de distribution. Cet ensemble modulaire est fermé à chacune de ses extrémités par un couvercle chapeau (9) comportant chacun une tuyauterie d'amenée ou d'évacuation du gaz. Le couvercle inférieur (9) pourra éventuellement être soudé au premier ensemble modulaire, tandis que le couvercle supérieur sera assemblé de façon étanche et démontable avec le dernier ensemble modulaire. Sur la figure 1, on a représenté un réacteur constitué d'un seul ensemble modulaire, mais il est bien évident que l'on pourrait tout aussi facilement superposer plusieurs ensembles modulaires en alignant des éléments cylindriques (1) de façon à constituer un réacteur de puissance supérieure. Il est bien évident que, dans le cas où le réacteur est constitué de la succession de plusieurs ensembles modulaires, les ensembles d'extrémité du réacteur peuvent avoir des couvercles soudés montés tête-bêche tandis que les autres ensembles seront assemblés de façon étanche et démontable grâce à un système à joint d'étanchéité (13) et bride (12).

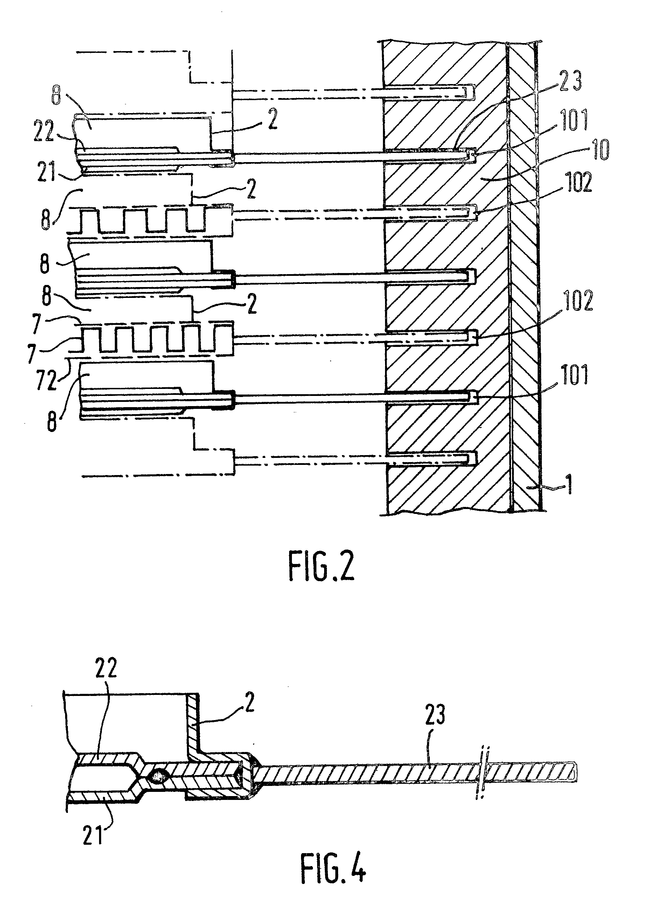

La figure 2 représente en détail les éléments constituant la structure sandwich, ces éléments étant accrochés à chaque crémaillère d'accrochage (10) par des languettes d'accrochage (23). La structure sandwich est constituée par la superposition d'éléments modulaires échangeurs en alternance avec des éléments sandwich conteneurs de sel.

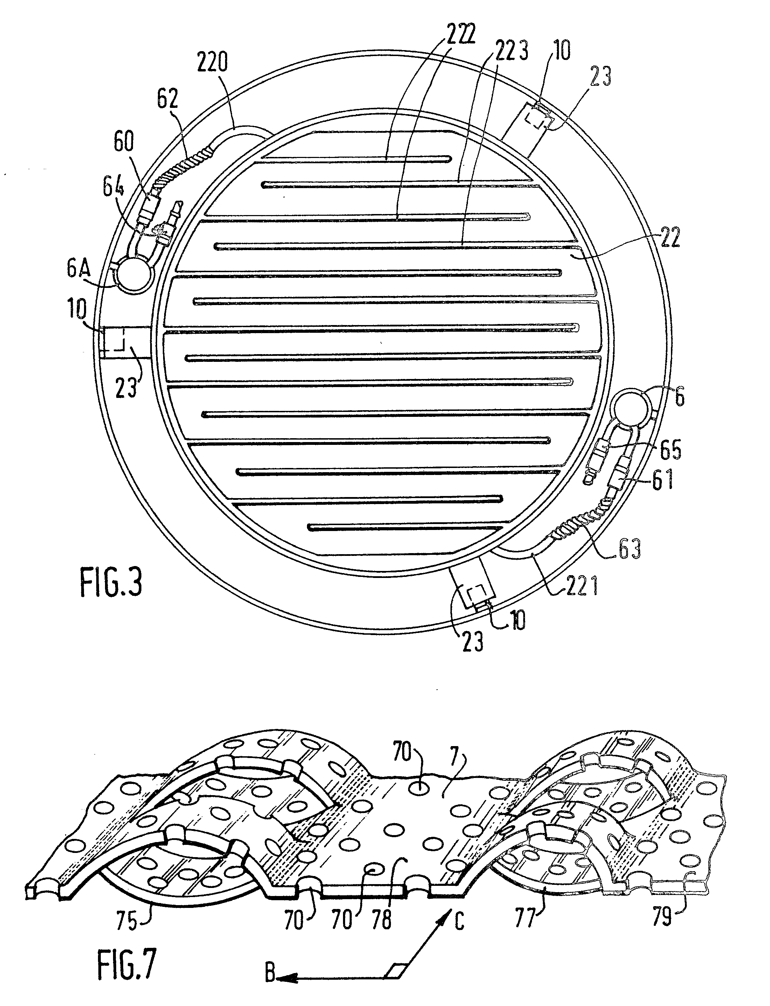

L'élément modulaire échangeur est constitué, comme on peut le voir, en liaison avec les figures 2 à 5 de deux plaques métalliques (21, 22) circulaires, embouties et soudées entre elles. Ces plaques métalliques sont embouties selon une forme de deux peignes imbriqués dont les dents de l'un (222) s'intercalent dans les dents de l'autre (223). La plaque supérieure comporte les dents (222, 223) et la plaque inférieure les dents (212, 213). La soudure, entre elles, de ces parties embouties permet de confectionner des cloisons formant un cheminement entre les dents du peigne obtenu par l'emboutissage (222) et les dents du peigne constitué par l'emboutissage (223) qui s'imbriquent dans les dents du premier pour former un labyrinthe. Ce cheminement débouche sur une tuyauterie d'arrivée (220) et une tuyauterie d'évacuation (221) du fluide caloporteur. L'élément changeur comporte à la périphérie circulaire de la plaque échangeur une jupe (2) qui se prolonge en au moins deux endroits par une languette d'accrochage (23). De façon avantageuse, comme on le voit à la figure 3, l'ensemble modulaire comporte trois crémaillères d'accrochage (10) et chaque élément échangeur ou conteneur de sel comporte également trois languettes d'accrochage qui viennent se loger dans les échancrures (101) de la crémaillère. La colonne d'arrivée du fluide caloporteur (6A) délivre, par son orifice (60) et un tuyau flexible (62), le fluide caloporteur à l'entrée (220) de l'échangeur. Après sa circulation dans l'échangeur, celui-ci est évacué par la sortie (221) de l'échangeur vers un flexible (63) qui est relié à la sortie (61) de la colonne d'évacuation du fluide (6E). Le tuyau d'arrivée de l'élément echangeur inférieur ou supérieur pour la colonne d'arrivée de fluide est représenté par l'élément (64) tandis que le tuyau d'évacuation de l'élément échangeur supérieur ou inférieur est représenté pour la colonne d'évacuation de fluide par l'élément (65).

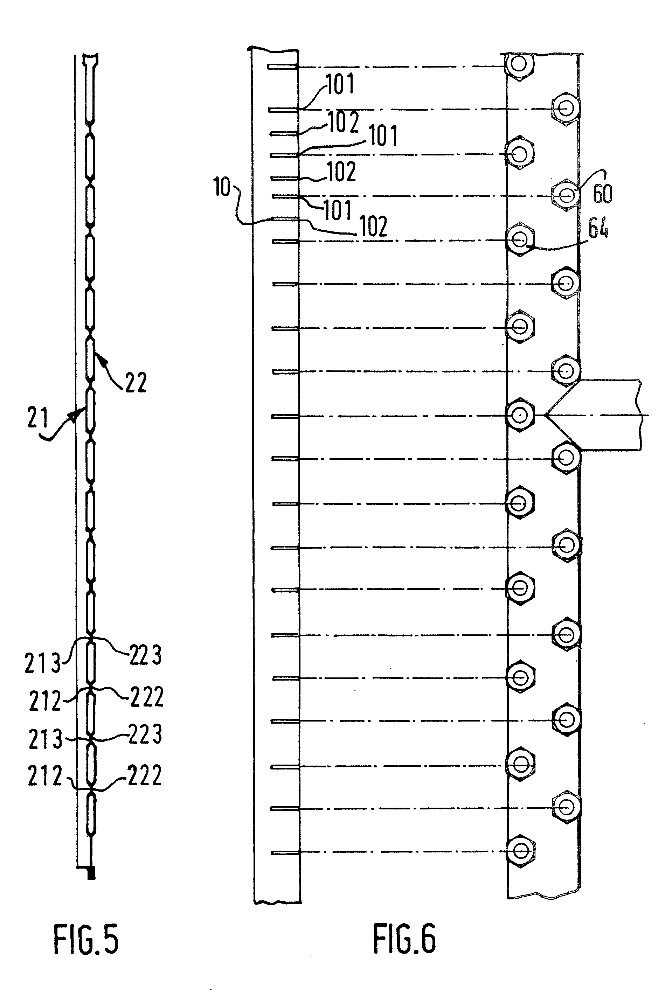

Ces tuyaux d'arrivée ou d'évacuation (60, 61, 64, 65) se situent comme on peut le voir à la figure 6 au même niveau que les échancrures (101) des crémaillères (10). La colonne d'arrivée (6A) reçoit par le tuyau (66) le fluide, tandis que la colonne d'évacuation (6E) évacue par le tuyau (67) le fluide. Ces tuyaux (66) et (67), solidaires perpendiculairement des colonnes (6A) et respectivement (6E), traversent vers l'extérieur la cloison cylindrique (1), comme on peut le voir à la figure 1, tout en préservant l'étanchéité du réacteur lorsque celui-ci est assemblé. Comme on peut le voir à la figure 2, entre deux échancrures (101) d'une crémaillère (10) se situe une échancrure (102) qui permet de recevoir une languette (23) d'un élément sandwich conteneur de sel. Cet élément sandwich conteneur de sel est constitué d'une jupe (2) fermée à sa partie inférieure par une grille fine (72), ayant un maillage permettant de retenir le sel (8). Sur cette grille (72) repose un élément (7) en métal déployé rigide, permettant la diffusion du gaz ainsi que la constitution d'un espace inter-compartiments. Au-dessus de cet élément (7) en métal déployé, se trouve une deuxième grille (71) dont la fonction est également de retenir le sel (8) placé au-dessus. Ainsi, comme on peut le voir à la figure 2, la grille (72) retient le sel (8) placé au-dessus d'un élément échangeur tandis que la grille (71) retient le sel placé au-dessus de la grille de l'élément en métal déployé (7), lorsque ceux-ci s'expansent au cours de la réaction.

L'élément en métal déployé est constitué, dans la direction représentée par la flèche (B), par une succession de zones planes (78, 79) en alternance avec des zones déformées (74, 76). De même, dans une direction perpendiculaire à cette première direction, représentée par la flèche (C), les zones déformées (74, 76) succèdent à des zones déformées (75, 77) dont la déformation est contraire à la déformation des premières zones de la direction perpendiculaire. Selon cette direction perpendiculaire, les zones déformées alternées se succèdent alternativement dans des sens opposés, telles que les zones (74, 75). Les zones planes (78, 79) se prolongent selon cette direction (C). La plaque, préalablement à la déformation, était pourvue de perforations (70) favorisant la circulation du gaz. De façon avantageuse l'épaisseur de l'élément en métal déployé est fixée à 10 mm, l'épaisseur de l'échangeur est de 10 mm et les différents éléments des éléments échangeurs et des éléments sandwich conteneurs de sel sont réalisés dans des tôles inox de 5/10 par emboutissage et soudure. Les grilles sont également en matériau inoxydable par les sels et le gaz. Une épaisseur de sel est placée au-dessus des échangeurs et des modules des éléments sandwich en métal déployé, le sel pouvant être, par exemple, un mélange de chlorure de calcium et de graphite expansé tandis que le gaz introduit par l'orifice (4) à une pression de l'ordre de 10 bars pourrait être, dans le cas de cet exemple, du méthylamine et le fluide caloporteur est introduit par l'orifice (67) sous une pression de l'ordre de 4 bars. Il est bien évident que d'autres associations de sel et de gaz, telles que celles décrites dans les brevets mentionnés précédemment peuvent également être utilisées.

On a ainsi décrit un réacteur de constitution modulaire et de compacticité optimale pour une puissance calorifique donnée. Cette puissance étant de l'ordre de 20 à 50 KW. Il est bien évident qu'en associant plusieurs ensembles modulaires entre eux, on peut faire varier la capacité de l'ensemble. On peut également envisager de faire varier la capacité en modifiant le nombre d'éléments placés en alternance, c'est-à-dire le nombre d'éléments supportés par les crémaillères et connectés aux colonnes d'arrivée et d'évacuation. La structure modulaire du réacteur permet de faciliter le chargement du réacteur en commençant par placer l'élément échangeur inférieur du module. Puis on remplit de sel et on branche l'échangeur aux colonnes (6A, 6E). Au-dessus, on dispose un élément sandwich conteneur de sel que l'on remplit. On réitère les opérations jusqu'au remplissage complet du module.

D'autres modifications à la portée de l'homme de métier font également partie de l'esprit de l'invention.

## Revendications

1 - Réacteur solide-gaz en lit fixe, caractérisé en ce qu'il comporte un ensemble modulaire constitué par une enveloppe cylindrique (1), une colonne de distribution de fluide caloporteur (6A) et une colonne de récupération de fluide (6E), au moins deux crémaillères (10) d'accrochage d'éléments échangeurs modulaires (2, 22, 21) et en alternance d'éléments sandwich (2, 7, 71, 72) conteneurs de sel chimique réagissant avec un gaz circulant entre les différents éléments modulaires.

2 - Réacteur selon la revendication 1, caractérisé en ce que les éléments échangeurs sont constitués de deux plaques (22, 21) circulaires, embouties et soudées entre elles, de façon à former un labyrinthe (222, 223) de circulation de fluide caloporteur entre la colonne de distribution (6A) et la colonne d'évacuation de fluide (6E), l'ensemble des deux plaques étant entouré d'une jupe (2) circulaire, disposée vers la partie supérieure pour former un réceptacle destiné à être rempli de sel.

3 - Réacteur selon la revendication 2, caractérisé en ce que les plaques (22, 21) sont embouties de façon à former, lorsqu'elles sont soudées entre elles, deux peignes (222, 223) dont les dents (222) de l'un s'imbriquent dans les dents (223) de l'autre.

4 - Réacteur selon une des revendications précédentes, caractérisé en ce que l'élément conteneur de sel est constitué d'une jupe cylindrique (2) fermée à sa partie inférieure par une grille fine (72) sur laquelle repose un élément (7) en métal déployé recouvert d'une deuxième grille (71), le restant du volume défini par la jupe et la deuxième grille étant rempli de sel.

5 - Réacteur selon une des revendications précédentes, caractérisé en ce que la colonne de distribution de fluide (6A) et la colonne de récupération de fluide (6E) sont reliées chacune aux échangeurs par des tuyaux flexibles (62, 63).

6 - Réacteur selon une des revendications 1 à 4, caractérisé en ce que les éléments échangeurs modulaires et sandwich comportent des languettes (23) de fixation solidaires de la plaque échangeur ou de la plaque en metal déployé et montées dans les encoches d'accrochage (101), (102) des peignes d'accrochage (10).

7 - Réacteur selon une des revendications précédentes, caractérisé en ce qu'on utilise comme sel un mélange de chlorure de calcium et de graphite expansé et comme gaz du méthylamine.

8 - Réacteur selon une des revendications précédentes, caractérisé en ce qu'il fonctionne avec un gaz sous une pression de l'ordre de 10 bars et en ce qu'il utilise un fluide caloporteur sous une pression de l'ordre de 4 bars.

9 - Réacteur selon une des revendications précédentes, caractérisé en ce que plusieurs ensembles modulaires sont montés en série et l'ensemble est fermé à chaque extrémité par un chapeau portant, l'un une tuyauterie (4) d'arrivée de gaz, l'autre une tuyauterie (5) d'évacuation de gaz.

10 - Utilisation de deux réacteurs selon une des revendications précédentes, caractérisée en ce que ces deux réacteurs sont associés de façon à constituer une pompe à chaleur thermochimique.

FIG. 1

FIG.2

FIG.4

FIG.3

FIG.7

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A-  17 672  (DUNSFORD (A.D. 1915)) <br> * Page 3, ligne 40 - page 4, ligne 42; figures 1-10 * <br> --- | 1,9 | B 01 J    8/02 <br> F 25 B   35/04 |
| A | US-A-2 252 667  (SCHLESMAN) <br> * Page 1, colonne de droite, ligne 44 - page 3, colonne de droite, ligne 75; figures 1-8 * <br> --- | 1,2,5 | |
| A | FR-A-  990 870  (NOUVELLE SOCIETE INDUSCHIMIE) <br> * Page 2, colonne de gauche, paragraphe 8 - page 3, colonne de gauche, avant-dernier paragraphe; figures 1-6 * <br> --- | 1 | |
| A | FR-A-2 334 932  (SOCIETE DE CONSTRUCTION D'USINES DE SEPARATION ISOTOPIQUE) <br> * Page 3, ligne 3 - page 8, ligne 37; figures 1-12 * <br> --- | 2,6 | |
| A | FR-A-2 225 230  (NORDON) <br> * Page 4, lignes 24-40; figure 1 * <br> --- | 3 | DOMAINES TECHNIQUES RECHERCHES (Int. Cl.4) |
| A | FR-A-1 302 612  (MOREAU) <br> * En entier * <br> --- | 3 | F 25 B <br> B 01 J <br> F 28 F |
| A | FR-A-2 547 512  (ELF AQUITAINE) <br> * Page 5, ligne 9 - page 7, ligne 5 * <br> --- | 7 | |
| A | FR-A-2 455 713  (WALLSTEN) <br> --- | | |
| A | FR-A-2 593 588  (NISHIYODO AIR CONDITIONER) <br> --- | | |
| A | US-A-2 624 182  (GROSS) <br> ---                    -/- | | |

Le présent rapport a été établi pour toutes les revendications

| Lieu de la recherche | Date d'achèvement de la recherche | Examinateur |
|---|---|---|
| LA HAYE | 12-12-1988 | BOETS A.F.J. |

EPO FORM 1503 03.82 (P0402)

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 224 219 (DASHER)<br>--- | | |
| A | GB-A-2 125 154 (EXXON RESEARCH AND ENGINEERING)<br>----- | | |

**DOMAINES TECHNIQUES RECHERCHES (Int. Cl.4)**

Le présent rapport a été établi pour toutes les revendications

| Lieu de la recherche | Date d'achèvement de la recherche | Examinateur |
|---|---|---|
| LA HAYE | 12-12-1988 | BOETS A.F.J. |

**CATEGORIE DES DOCUMENTS CITES**

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P0402)